# EUROPEAN PATENT APPLICATION

(11) **EP 4 822 408 A1**
(43) Date of publication of application: **14.10.2026**
(21) Application number: 25382373.6
(22) Date of filing: 10.04.2025
(51) Int. Cl.: G02B 5/10, B29C 33/76, B29C 39/12, C03C 27/00

(54) **METHOD FOR MANUFACTURING A CURVED MIRROR AND CORRESPONDING MIRROR OBTAINED BY SAID METHOD**

(71) Applicant: Slimop Space S.L., 08018 Barcelona (ES)
(72) Inventor: Ferrer Puig, Eduardo Juan, 08018 Barcelona (ES); Torres Sabaté, Armengol, 08018 Barcelona (ES); Santillán Iturres, Alejandro Javier, 08018 Barcelona (ES)
(74) Representative: Curell Suñol S.L.P.

(57) **Abstract**

Method for manufacturing a curved mirror (10), in particular, a mirror for a telescope, making use of a piston (1), having a convex piston end (100), and a mirror base (2), having a concave base end (200); comprising the following steps:
[a] providing an adhesive (3) over said concave base end (200);
[b] providing a membrane (4) over said concave base end (200), such that said adhesive (3) is layered between said membrane (4) and said concave base end (200);
[c] using said convex piston end (100), pressing said membrane (4) against said concave base end (200), thereby deforming said membrane (4);
[d] curing said adhesive (3), thereby attaching said membrane (4) to said base (2)by means of said adhesive (3);
[e] removing said piston (1) from said membrane (4); and
[f] applying a reflective coating over said membrane (4);
thereby obtaining said curved mirror (10).

## Description

### Field of the invention

The invention lies in the field of the manufacture of curved mirrors, in particular, mirrors aimed for telescopes or other optical applications, and more specifically, for its use as primary mirrors of satellite telescopes.

In particular, the invention relates to a method for manufacturing a curved mirror, in particular, a mirror for a telescope.

The invention also relates to a mirror obtained by said method.

### Prior art

Primary telescope mirrors are high-precision elements that are typically manufactured by sanding and polishing a mirror blank and coating it with a reflective material. The surface of the mirror requires a low error tolerance in order to avoid optical artifacts in the resulting image of the telescope. The tolerance refers to the deviation from the ideal shape of the surface. Extreme caution and precision has to be taken for each mirror that is manufactured and, therefore, high-precision curved mirrors are generally expensive and difficult to obtain. In addition, the mirror is carved from a thick mirror blank due to the required mechanical resistance for the process and, therefore, the resulting element is usually heavy and bulky, which can be a disadvantage for telescopes aimed for space use, for example, satellite telescopes.

Another type of solutions are inflatable telescope mirrors, wherein a pneumatic system is used for inflating or deflating an air chamber thereby dynamically curving a membrane that acts as a mirror. However, inflatable mirrors must be accurately controlled when there are changes in the environmental pressure, for example, if the inflatable mirror is manufactured at ground level and then sent to space.

### Summary of the invention

The invention is aimed to provide a method for manufacturing a curved mirror of the type stated at the beginning, being able to avoid the problems that have been identified above.

This purpose is achieved by a method for manufacturing a curved mirror of the type indicated at the beginning, characterized in that it makes use of:
- a piston, having a convex piston end with a convex surface; and
- a mirror base, having a concave base end with a concave surface surrounded by an outer perimeter;
the method comprising the following steps:
[a] providing an adhesive over said concave base end;
[b] providing a membrane over said concave base end, such that said adhesive is layered between said membrane and said concave base end;
[c] using said convex piston end, pressing said membrane against said concave base end, thereby deforming said membrane;
[d] curing said adhesive, thereby attaching said membrane to said base by means of said adhesive;
[e] removing said piston from said membrane; and
[f] applying a reflective coating over said membrane;
thereby obtaining said curved mirror.

The membrane, preferably a membrane with optics quality surface, is deformed by the piston and conforms to the convex piston end, therefore, the convex piston end has a shape that is complementary to the shape of the mirror to be manufactured (that will be concave) and must be accurate enough for the specific application of the curved mirror. For example, in mirrors aimed for telescopes, a high degree of accuracy is needed for the convex piston end. After curing the adhesive, preferably a low-shrinkage adhesive, the deformed membrane is permanently attached to the concave base end. With the method disclosed herein, extremely accurate polishing or etching the surface of the mirror is not necessary. Moreover, the piston can be reused for manufacturing several curved mirrors, therefore, even if a high degree of precision and low tolerance may be needed for manufacturing the convex piston end, this process is only done once. The method reduces the manufacturing cost of the curved mirror compared to the traditional mirror manufacturing and may also reduce the manufacturing time. It is worth noting that the order of some steps may vary, for example, it may be envisaged that step [f] is done at some point before step [c] in order to provide additional resistance to fragile or very thin membranes in order to reduce the risk of breaking during its deformation in step [c]. Since only the mirror is a thin membrane and a base, the method further allows obtaining curved mirrors with a reduced weight and mass depending on the materials and structure of the base.

Preferably, said convex piston end has a parabolic shape in order to create a parabolic-shaped mirror.

Preferably, said mirror is aimed to operate at least at a minimum wavelength; wherein said convex surface of convex piston end has a surface tolerance of ±Tp, wherein Tp is not greater than a twentieth said minimum wavelength. In order to minimize the optical effect of irregularities in the surface of the mirror that could lead to optical artifacts and distortion, the resulting surface should have a low tolerance, that is, a low deviation from the ideal shape. In optical terms, this deviation must be smaller than a tenth of the smallest working wavelength of the telescope. The deviation can be positive or negative, that is, a bump or a hole in the surface. Therefore, a positive Tp term is defined, such that ±Tp is a tenth of the wavelength, and Tp is half said value, i.e., a twentieth.

Preferably, said convex piston end has a first sagitta and said concave base end has a second sagitta, said second sagitta being greater that said first sagitta. The sagitta of an arc is the distance from the midpoint of the arc to the midpoint of its chord. In geometry the term typically refers to circular arcs, however, in the context of this document, the term refers to a more general arc, not limited to a circular shape. If the convex piston end and the concave base end do not have the same diameter, the sagittas mentioned above must be compared using only the portions having the same diameter. For example, if the convex piston end has a larger diameter than the concave base end, only the tip of the convex piston end with the same diameter than the concave base end will be used for the comparison. In fact, the comparison of the sagittas refers to the different curvatures of each corresponding end, the underlying feature of this embodiment is that the concave base end is "more curved" (i.e., has a smaller curvature radius in case of circular shapes) than the convex piston end. This configuration has the advantage that it facilitates accommodating the liquid adhesive between the base and the membrane, and to allow for a greater tolerance of the shape of the concave base end. Indeed, when the piston presses the membrane, said membrane conforms to the convex piston end, not to the base (except in the outer perimeter of the base end). This means that the shape of the base end may be less accurate than the piston, which is advantageous because a base is manufactured for each mirror while the piston can be reused several times.

Preferably, said convex piston end has a diameter of 200 mm, and a sagitta of 2.500 mm; and said concave base end has a diameter of 200 mm and a sagitta of 2.503 mm. It is preferable that the convex piston end has a diameter equal or larger than the concave base end, and also preferable that the membrane diameter is a bit smaller than the diameter of the concave base end. These values have been found advantageous for manufacturing parabolic curved mirrors having 195-198 mm diameter.

Preferably, said concave base end has a central surface zone, and an outer surface zone, said outer surface zone surrounding said central surface zone and neighbouring said outer perimeter; said central surface zone having a central surface tolerance of ±Tc and said outer surface zone having an outer surface tolerance of ±To, To being smaller than Tc, preferably, at least 10 times smaller. In configurations wherein the base end is more curved than the piston end the only part of the concave base end that must be accurately shaped, if necessary for the purpose of the mirror, is a zone near the outer perimeter thereof because there is where the two surfaces (piston and base end) converge and are more proximate to one another when the piston presses the membrane against the base. The tolerance of the outer surface zone may be manufactured with a high degree of accuracy, if necessary, while the accuracy for the rest of the concave base end may be worse and, even in this case, it is possible to obtain accurately shaped curved mirrors.

Preferably, Tc is 20 microns and To is 1.6 microns.

Preferably, said convex piston end has a surface tolerance of ±Tp, and wherein Tp is smaller than Tc, preferably, at least 500 times smaller. As it has been discussed above, the configuration allows obtaining accurately shaped curved mirrors even if the base end is not as precisely shaped as the piston end. It has been found that this difference may even be several orders of magnitude (for example, nanometres vs micros) which is a considerable technical advantage over the methods known in the art.

Preferably, said adhesive is ultraviolet-curable, and said step [d] is done by applying ultraviolet light to said adhesive. More preferably, the adhesive is Dymax^{®} OP-30 UV Optical Adhesive. UV-curable adhesives are particularly well suited for the invention because they allow working with common illumination in a cleanroom (a physical room with low airborne contaminants) and curing the adhesive by applying a particular illumination that can be conveyed to the required zone, for example, by illuminating UV light from the borders of the membrane.

As an alternative embodiment, the adhesive is replaced by a metal or an alloy having a low fusion temperature, preferably iridium. The skilled person will understand that the metal or alloy must have a good adherence to the materials chosen for the membrane and the base. In these embodiments, in step [d] instead of curing the adhesive, a change in temperature is used.

Preferably, said mirror base further comprises a central hole, preferably having a 40mm diameter; and a removable hole plug; wherein said removable hole plug is inserted in said central hole during steps [a] to [d] and removed after step [d]. The central hole is used for mounting the primary mirror in some telescope configurations. The hole is covered with a hole plug during manufacturing, such that the adhesive is not pushed outside the interface between the membrane and the concave base end, and removed after the adhesive is cured.

Preferably, the method further comprises the step:
[g] drilling a central hole in the membrane, aligned to said central hole of said mirror base;
wherein said step [g] is performed after said step [e]. This allows creating a through hole in the curved mirror.

Preferably, said outer perimeter of said concave base end is circular, such that the resulting curved mirror is also circular.

Preferably, said outer perimeter of said concave base end is a polygon, in particular, a square or a rectangle. The method of the invention can be used to manufacture curved mirrors having a polygonal contour, for example, square or rectangular mirrors. This is particularly advantageous for some configurations where the mirror has to be installed and can take profit of all the available area for installing the mirror, thereby resulting in a better resolution for the corresponding telescope.

Preferably, said piston is made of steel, preferably a pre-hardened, and corrosion-resistant steel, more preferably of S136H steel.

Preferably, said mirror base is made of a lightweight metal, a composite material, or a ceramic, more preferably aluminium oxide, Al₂O₃, 99% wt. A non-limiting example of a preferred lightweight metal is Kovar^{®} because it can be in thermal expansion equilibrium with a glass wafer used as the membrane of the mirror. Other non-limiting examples of suitable material is a nickel-cobalt ferrous alloy, or an alloy that is thermally compatible with the reflective surface of the flexible mirror and also with the material of the membrane.

Preferably, said membrane is made of at least one of:
- glass, preferably one of silicon glass and borosilicate glass;
- quartz;
- sapphire; and
- crystalline silicon, often referred to as c-Si, as the wafers used in the manufacture of integrated circuits.

Preferably, said membrane has a coefficient of thermal expansion that is compatible with the adhesive and the materials of the mirror base, the compatibility comprises that any expansion or shrinkage due to changes in temperature is approximately the same for the range of temperatures that the mirror is expected to be exposed to.

Preferably, said membrane has a thickness of 0.1 to 1.1 mm, preferably having a diameter of 195-198 mm.

The invention also refers to a mirror obtained by the method according to any one of the embodiments described above.

Preferably, said mirror is a mirror aimed as a primary mirror for a telescope or for an optical communication system, in particular, for its use in space.

Preferably, said mirror has a polygonal contour, in particular, being a square or a rectangle.

The invention also includes other detailed features illustrated in the detailed description of some embodiments of the invention and in the accompanying figures.

### Brief description of the figures

Further advantages and features of the invention will become apparent from the following description, in which, without any limiting character, preferred embodiments of the invention are disclosed, in reference to the accompanying figures:
Fig. 1A to 1E are schematic representations of different stages of a method for manufacturing a curved mirror according to the invention. The figures are simplified section views of the end part of the piston and the base.
Fig. 2A is a top view of a mirror base having a central hole.
Fig. 2B is a section view of the mirror base of Fig. 2A. The section has been taken from the dashed line of Fig. 2A.

### Detailed description of embodiments of the invention

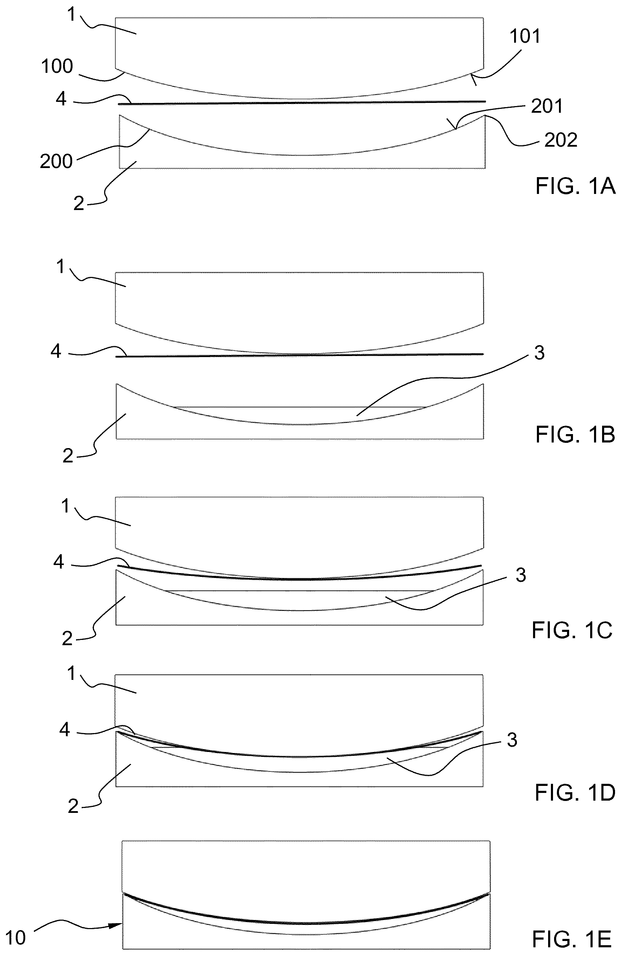

Fig. 1A to 1E show different stages of a first exemplary embodiment, the method for manufacturing a curved mirror 10 according to the invention. The mirror 10 obtained by the method is aimed as a primary mirror for a space telescope.

The method is done in a cleanroom and makes use of a piston 1, having a convex piston end 100 with a convex surface 101. The piston 1 is made of S136H steel which is a pre-hardened and corrosion-resistant steel. The classification level of the cleanroom to be used for the manufacture of the curved mirror 10 is dependent on the wavelength of the light intended to be used for by the mirror 10. For example, an ISO 3 clean room can be used for far infrared, IR, but an ISO 1 cleanroom is recommended for visible wavelengths, VIS.

The section of the convex piston end 100 is parabolic, such that the resulting convex surface 101 is a paraboloid of revolution. In other embodiments, the convex surface 101 is a hyperboloid. The method also makes use of a mirror base 2, having a concave base end 200 with a concave surface 201 surrounded by an outer perimeter 202. The concave base end 200 has a round section, so that the concave surface 201 is a spheroid. In other embodiments, the concave base end 200 has the same type of shape as the convex piston end 100. The outer perimeter of the convex piston end 100, and the outer perimeter 202 of the concave base end 200 are circular and each have a diameter of 200 mm. The convex piston end 100 has a sagitta of 2.500 mm, while the concave base end 200 has a sagitta of 2.503 mm, slightly greater than the sagitta of the convex piston end 100.

A small amount of Dymax^{®} OP-30 UV Optical Adhesive, which is a liquid UV-curable, low-shrinkage adhesive is provided over the concave base end 200 in a step [a], and a membrane 4 is provided on top the concave base end in a step [b]. A reflective coating is applied on top of the membrane 4 in a step [f] of the method.

The resulting configuration is placed under the piston 1 as shown in Fig. 1B where it can be seen that the adhesive 3 is layered between the membrane 4 and the concave base end 200. The membrane 4 is a thin film of borosilicate glass having a thickness of 1 mm and a diameter of 200 mm. Other embodiments may be envisaged wherein the membrane 4 is made of other type of glass, for example, silicon glass, and/or have a different thickness, for example, ranging from 0.1 to 1.1 mm. The mirror base 2 is made of Kovar^{®} which is a lightweight nickel-cobalt ferrous alloy that is thermally compatible with the material of the membrane 4. Different materials may be envisaged for the mirror base 2, in particular, lightweight materials like alumina ceramics that are thermally compatible with the material of the membrane 4, that is, that they expend/contract approximately the same with temperature changes in the range of temperatures that the mirror 10 is expected to be exposed to.

In a step [c] of the method, the piston is used for pressing membrane 4 against the mirror base 2. In particular, the piston end 100 presses the membrane 4 against the concave base end 200, deforming the membrane in the process as shown schematically in Fig. 1C to Fig. 1E. The pressure also forces the adhesive 3 to expand in the interface between the membrane 4 and the concave surface 201.

In step [d] of the method, the adhesive is cured using a UV light applied to the perimeter border of the membrane 4 and therefore conveyed by the membrane 4 to the adhesive 3 under it. The membrane 4 gets attached to the concave base end 200 by means of the cured adhesive 3 thereby forming the curved mirror 10 shown in Fig. 1E.

In step [e] of the method, the piston 1 is removed from the membrane 4 thereby releasing the curved mirror 10 that is obtained by the method.

In the first embodiment, the convex piston end 100 has a maximum surface deviation from the ideal parabolic shape (tolerance) of ±Tp, wherein Tp is 17 nanometres. The total tolerance is 34 nanometres. The working wavelength should be at least 10 times said value, i.e., 340 nanometres, which lies in the near ultraviolet. Therefore, the mirrors 10 obtained with the method of this first embodiment are able to operate at wavelengths including the visible light and infrared, IR, possibly also in the near ultraviolet light.

The concave base end 200 has two different zones: a central surface zone, and an outer surface zone. The outer surface zone is a narrow 4mm to 10 mm band that surrounds the central surface zone and extends until the outer perimeter 202. The division in two zones is merely due to the manufacturing tolerance of each one. The central surface zone tolerance is ±Tc, wherein Tc is 20 micrometres, and the tolerance of the outer surface zone is ±To, wherein To is 1.6 micrometres. This means that the tolerance of the central surface zone is almost 1200 times the tolerance of the convex piston end 100.

Other embodiments of the method according to the invention are disclosed hereinafter. These embodiments share most of the features disclosed in the first embodiment above. Therefore, only the differentiating features will be described in detail. For the sake of brevity, common features shared with the first embodiment disclosed above will not be described again hereinbelow.

In a second embodiment, step [f] wherein the reflective coating is applied over the membrane 4 is done after step [g], that is, after the piston 1 is removed from the membrane 4.

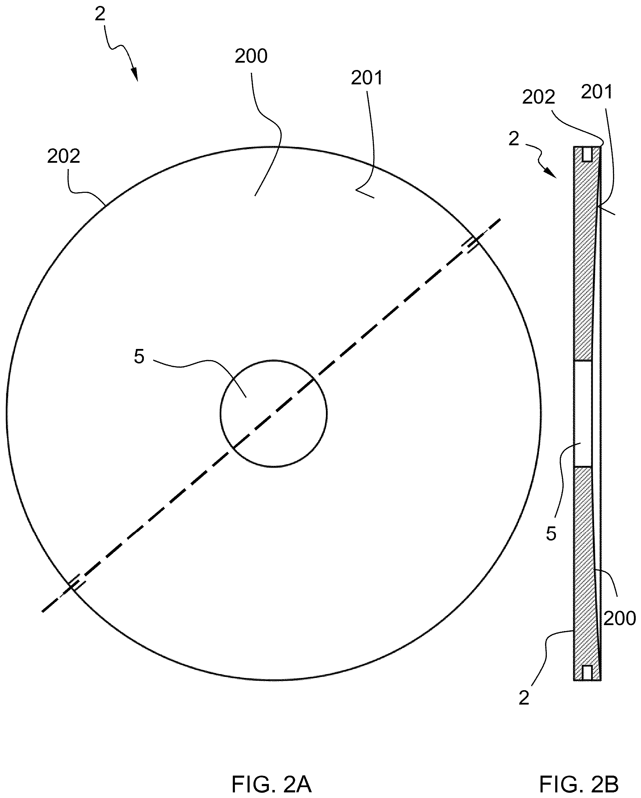

Fig. 2A and Fig. 2B show a mirror base 2 used in a third embodiment of the method of the invention. The mirror base 2 has a central hole 5 a 40mm diameter. A removable plug is inserted into the hole during steps [a] to [d], and removed after the adhesive 3 is cured in step [d]. The method has an additional step [g], performed after step [e] wherein a central hole is drilled in the membrane 4, aligned to the central hole 5 of the mirror base 2.

In a fourth embodiment of the method, the outer perimeter 202 of the concave base end 200 is a rectangle. In other embodiments, the outer perimeter 202 is square or another polygon, for example, a hexagon.

In other embodiments, derived from any of the embodiments described above, the mirror base 2 is made of aluminium oxide, Al₂O₃, 99% wt. In other embodiments, the mirror base 2 is made of a lightweight metal, a composite material, or a ceramic.

In some embodiments, derived from any of the embodiments described above, the membrane 4 is made of another sapphire or crystalline silicon, c-Si, the crystalline silicon being the material used for manufacturing the wafers used in integrated circuits.

The invention also relates to the mirrors 10 obtained by the method according to any one of embodiments described above, in particular, mirrors aimed as primary mirrors for space telescopes or for space optical communication systems, in particular.

In a second embodiment of the mirror 10 obtained by the fourth embodiment of the method for manufacturing described above, said mirror 10 has a rectangular contour. In other embodiments, the mirror 10 has a square contour, another polygonal shape or a circular contour.

## Claims

1. Method for manufacturing a curved mirror (10), in particular, a mirror for a telescope, **characterized in that** it makes use of:
- a piston (1), having a convex piston end (100) with a convex surface (101); and
- a mirror base (2), having a concave base end (200) with a concave surface (201) surrounded by an outer perimeter (202);
the method comprising the following steps:
[a] providing an adhesive (3) over said concave base end (200);
[b] providing a membrane (4) over said concave base end (200), such that said adhesive (3) is layered between said membrane (4) and said concave base end (200);
[c] using said convex piston end (100), pressing said membrane (4) against said concave base end (200), thereby deforming said membrane (4);
[d] curing said adhesive (3), thereby attaching said membrane (4) to said base (2) by means of said adhesive (3);
[e] removing said piston (1) from said membrane (4); and
[f] applying a reflective coating over said membrane (4);
thereby obtaining said curved mirror (10).

2. Method according to claim 1, wherein said convex piston end (100) has a parabolic shape.

3. Method according to any one of the claims 1 or 2, wherein said mirror (10) is aimed to operate at least at a minimum wavelength; wherein said convex piston end (100) has a surface tolerance of ±Tp, wherein Tp is not greater than a twentieth said minimum wavelength.

4. Method according to any one of the claims 1 to 3, wherein said convex piston end (100) has a first sagitta and said concave base end (200) has a second sagitta, said second sagitta being greater that said first sagitta.

5. Method according to claim 4, wherein:
- said convex piston end (100) has a diameter of 200 mm, and a sagitta of 2.500 mm;
- said concave base end (200) has a diameter of 200 mm and a sagitta of 2.503 mm.

6. Method according to any one of the claims 4 or 5, wherein said concave base end (200) has a central surface zone, and an outer surface zone, said outer surface zone surrounding said central surface zone and neighbouring said outer perimeter (202); said central surface zone having a central surface tolerance of ±Tc and said outer surface zone having an outer surface tolerance of ±To, To being smaller than Tc, preferably, at least 10 times smaller; more preferably, wherein Tc is 20 microns and To is 1.6 microns.

7. Method according to claim 6, wherein said convex piston end (100) has a surface tolerance of ±Tp, and wherein Tp is smaller than Tc, preferably, at least 500 times smaller.

8. Method according to any one of the claims 1 to 7, wherein said adhesive (3) is ultraviolet-curable, and said step [d] is done by applying ultraviolet light to said adhesive (3).

9. Method according to any one of the claims 1 to 8, wherein said mirror base (2) further comprises:
- a central hole (5), preferably having a 40mm diameter; and
- a removable hole plug;
wherein said removable hole plug is inserted in said central hole (5) during steps [a] to [d] and removed after step [d].

10. Method according to claim 9, further comprising the step:
[g] drilling a central hole in said membrane (4), aligned to said central hole (5) of said mirror base (2);
wherein said step [g] is performed after said step [e].

11. Method according to any one of the claims 1 to 10, wherein said outer perimeter (202) of said concave base end (200) is circular.

12. Method according to any one of the claims 1 to 10, wherein said outer perimeter (202) of said concave base end (200) is a polygon, in particular, a square or a rectangle.

13. Method according to any one of the claims 1 to 12, wherein said membrane (4) is made of at least one of:
- glass, preferably one of silicon glass and borosilicate glass;
- quartz;
- sapphire; and
- crystalline silicon;
preferably, wherein said membrane (4) has a thickness of 0.1 to 1.1 mm, more preferably having a diameter of 195 to 198 mm.

14. Mirror (10) obtained by the method according to any one of the claims 1 to 13, preferably wherein is a mirror aimed as a primary mirror for a telescope or for an optical communication system, in particular, for its use in space.

15. Mirror (10) according to claim 14, wherein said mirror (10) has a polygonal contour, in particular, being a square or a rectangle.
